(19) Europäisches Patentamt / European Patent Office / Office européen des brevets

(11) **EP 3 661 609 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **18762226.1**

(22) Anmeldetag: **01.08.2018**

(51) Internationale Patentklassifikation (IPC):
*A62C 35/68* (2006.01)     *F16K 37/00* (2006.01)
*A62C 37/50* (2006.01)

(52) Gemeinsame Patentklassifikation (CPC):
**A62C 35/68; A62C 37/50; F16K 5/0605;**
**F16K 27/067; F16K 37/005; F16K 37/0066**

(86) Internationale Anmeldenummer:
**PCT/EP2018/070884**

(87) Internationale Veröffentlichungsnummer:
**WO 2019/025495 (07.02.2019 Gazette 2019/06)**

(54) **FEUERLÖSCHANLAGENVENTIL, INSBESONDERE NASSALARM-, TROCKENALARM-, ODER SPRÜHWASSERVENTIL SOWIE STEUERMODUL FÜR SELBIGES UND FEUERLÖSCHANLAGE MIT SELBIGEM**

FIRE EXTINGUISHING SYSTEM VALVE, IN PARTICULAR WET ALARM VALVE, DRY ALARM VALVE OR SPRAY WATER VALVE AND CONTROL MODULE FOR THE SAME AND FIRE EXTINGUISHING SYSTEM UTILIZING THE SAME

VANNE D'INSTALLATION D'EXTINCTION D'INCENDIE, EN PARTICULIER VANNE D'ALARME HUMIDE, D'ALARME SÈCHE OU D'EAU DE PULVÉRISATION AINSI QUE MODULE DE COMMANDE POUR CELLE-CI ET INSTALLATION D'EXTINCTION D'INCENDIE ÉQUIPÉE DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2017 DE 102017117417**

(43) Veröffentlichungstag der Anmeldung:
**10.06.2020 Patentblatt 2020/24**

(73) Patentinhaber: **Minimax GmbH**
**23843 Bad Oldesloe (DE)**

(72) Erfinder:
• **KEMPF, Peter**
**23843 Bad Oldesloe (DE)**
• **STACHOWITZ, Frank**
**23909 Ratzeburg (DE)**
• **ENGELSMAN, Eduard**
**23554 Lübeck (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-A1-102007 049 588    DE-B- 1 239 571**
**US-A1- 2011 048 745**

EP 3 661 609 B1

**Beschreibung**

Die vorliegende Erfindung betrifft ein Feuerlöschanlagenventil, insbesondere ein Nassalarm-, Trockenalarm- oder Sprühwasserventil, mit einem Gehäuse, welches eine Fluideintrittskammer, eine Fluidaustrittskammer und eine zwischen einem Sperrzustand und einem Freigabezustand hin- und her bewegbaren Schließkörper aufweist, wobei die Fluideintrittskammer und die Fluidaustrittskammer im Freigabezustand fluidleitend unmittelbar miteinander kommunizieren, und der Schließkörper im Sperrzustand die unmittelbare Kommunikation zwischen der Fluideintrittskammer und der Fluidaustrittskammer unterbindet.

Feuerlöschanlagenventile der vorbezeichneten Art sind allgemein bekannt. Unter Feuerlöschanlagenventilen wird im Sinne der vorliegenden Erfindung die Gattung sowohl passiver als auch aktiver Alarmventile für den Einsatz in Feuerlöschanlagen, speziell Feuerlöschanlagen mit wasserbasierten Löschmitteln (beispielsweise Wasser, Wasser mit Zusätzen, u. dgl.) verstanden. Prominenteste Vertreter dieser Ventiltypen sind Nass- und Trockenalarmventile sowie Sprühwasserventile. Unter einem passiven Alarmventil wird ein Ventil verstanden, das bei Überschreiten vorgegebener Druckdifferenzen zwischen Eintritt- und Austrittsseite selbsttätig öffnet. Von dem Ventil wird selbst in der Regel ein Alarm ausgelöst in Reaktion auf das Erfassen des Öffnungszustandes, beispielsweise mittels eines in einer externen Alarmleitung angeordneten Druckschalters, über den dann ein Alarmmittel wie etwa eine elektrisch betriebene Alarmhupe gesteuert wird, und/oder unmittelbar durch die Steuerung des Löschmittelflusses zu einem fluidtechnisch, mit dem Alarmventil verbundenen hydraulisch betriebenen Alarmmittel, wie etwa einer wasserbetriebenen Alarmglocke. Aus DE 10 2007 049 588 A1 ist beispielsweise ein elektrisch gesteuerter Schnellentlüfter für ein Trockenrohrnetz mit Sprinklern bekannt. Der Schnellentlüfter besteht aus Rohrleitungen, den Sprinklern, Trockenalarmventil, Wasserversorgung, Druckleitungsnetz, Armaturen und Entlüftungsventil, wobei am Trockenrohrnetz mit Sprinklern und Trockenalarmventil ein Magnetventil angeordnet ist, welches mittels einer Steuerzentrale und einem Druckschalter ausgelöst wird. Bisweilen werden auch anstelle von oder zusätzlich zu hydraulisch betriebenen Alarmglocken optische Anzeigen im Bereich der Alarmventile angeordnet, um bei einer Vielzahl parallel angeordneter Alarmventile besser unterscheiden zu können, welches der Alarmventile geöffnet wurde.

Unter einem aktiven Alarmventil wird ein Ventil verstanden, das nach einem Eingang eines korrespondierenden Signals von externen Branderkennungsmitteln oder als Funktion von externen Steuereingriffen aktiv mittels Öffnen des Schließkörpers einen Fluidstrom von der Fluideintrittskammer in die Fluidaustrittskammer freigibt und einen Alarm auslöst. Beiden vorgenannten Ventiltypen ist gemein, dass die Alarmventile oft über lange Zeiträume in Feuerlöschanlagen installiert sind, ohne zum Einsatz kommen zu müssen und sichergestellt werden muss, dass diese Ventile im Ernstfall zuverlässig funktionieren.

Feuerlöschanlagenventile sind im Sperrzustand typischerweise eintrittsseitig mit einer Wasserversorgung verbunden, die einen im Wesentlichen konstanten Versorgungsdruck aufweist, bereitgestellt beispielsweise von einer Pumpenanlage. In der Wasserversorgung können bisweilen allerdings Druckschwankungen auftreten, insbesondere wenn die Feuerlöschanlage mit dem Trinkwassernetz unmittelbar verbunden ist. Feuerlöschanlagenventile, insbesondere Nassalarmventile, sind austrittsseitig typischerweise mit einem Rohrnetz verbunden, in dem Sprinkler beziehungsweise Düsen vorgesehen sind. Auch austrittsseitig entstehen aufgrund beispielsweise von Temperaturschwankungen Druckschwankungen.

Es besteht aufgrund der langen Standzeiten der Feuerlöschanlagen die Notwendigkeit, in bestimmten Zeitabständen die Funktionsfähigkeit der Alarmmittel und/oder die Funktionsfähigkeit des Feuerlöschanlagenventils selbst zu überprüfen. Hierzu wurden im Stand der Technik in der Vergangenheit unter anderem externe Verrohrungen an der Ventilstation vorgesehen, um Löschmittel von der Austrittsseite des Löschanlagenventils aus, am Schließkörper vorbei, ablassen zu können, und so einen Löschvorgang zu simulieren. Durch den mit dem Ablassen des Löschmittels einhergehenden Druckabfall in der, vom Feuerlöschanlagenventil aus gesehen, austrittsseitigen Leitung konnte so ein Öffnen des Ventils provoziert und eine Alarmprobe vorgenommen werden.

Der zum Realisieren dieser Funktionen erforderliche bauliche Aufwand und die zur Montage der nötigen Apparaturen benötigte Zeitdauer werden allgemein als nachteilig empfunden. Vor diesem Hintergrund lag der Erfindung die Aufgabe zugrunde, ein Feuerlöschanlagenventil der eingangs bezeichneten Art dahingehend weiterzuentwickeln, dass eine zeit- und kosteneffiziente Montage möglichst unter Verwirklichung der vorstehend beschriebenen Funktionen ermöglicht wird.

Die Erfindung löst die ihr zugrundeliegende Aufgabe in einem ersten Aspekt, in dem das Gehäuse einen dedizierten Ablasskanal aufweist, der wenigstens einen mit der Fluidaustrittskammer verbundenen Einlass und einen aus den Gehäuse des Feuerlöschanlagenventils herausführenden Auslass aufweist, und der in das Gehäuse integriert ist, und indem das Gehäuse ein Steuermodul aufweist, welches, dazu eingerichtet ist, wahlweise den dedizierten Ablasskanal in einer Ablassstellung in Richtung seines Auslasses freizugeben oder in einer Sperrstellung fluiddicht in Richtung seines Auslasses zu verschließen, und in einer Alarmprobenstellung Löschfluid über einen Kanalabschnitt mit einem Querschnitt aus der Fluidaustrittskammer abzuführen, der geringer ist als der geringste Querschnitt des dedizierten Ablasskanals.

Die Erfindung beruht auf der Erkenntnis, dass eine Integration des mit der Fluidaustrittsseite verbundenen dedizierten Ablasskanals in das Gehäuse des Feuerlöschanlagenventils trotz einer vermeintlichen Erhöhung der Bauteilkomplexität des Gehäuses überraschenderweise eine deutliche Vereinfachung des gesamten konstruktiven und apparativen Aufwands zur Realisierung einer direkten Ablassfunktion oder Alarmprobenfunktion aus der an das Feuerlöschanlagenventil auslassseitig angeschlossene Rohrleitung gegenübersteht.

Die Erfindung wird vorteilhaft weitergebildet, indem das Gehäuse einen Gehäusegrundkörper aufweist, in dem die Fluideintrittskammer und die Fluidaustrittskammer ausgebildet sind und der Schließkörper angeordnet ist, wobei das Steuermodul reversibel lösbar mit dem Gehäusegrundkörper verbunden ist, wobei der dedizierte Ablasskanal in dem Steuermodul ausgebildet ist.

Vorzugsweise ist in dem dedizierten Ablasskanal ein Absperrorgan angeordnet welches wahlweise in die Sperrstellung oder in die Ablassstellung schaltbar ist.

Je nach Dimensionierung des Ablasskanals kann bei Schalten des Absperrorgans im Ablasskanal in seine Freigabestellung zügig Wasser aus der auslassseitigen Rohrleitung der Feuerlöschanlage bei installiertem Feuerlöschanlagenventil abgelassen werden.

In einer bevorzugten Weiterbildung der Erfindung weist das Feuerlöschanlagenventil zusätzlich zu dem dedizierten Ablasskanal einen weiteren mit der Fluidaustrittskammer fluidleitend verbundenen, in das Gehäuse integrierten und aus dem Gehäuse herausführenden Ablasskanal auf, wobei einer der Ablasskanäle als Alarmprobenkanal ausgebildet ist und einen Querschnitt aufweist, der zumindest abschnittsweise geringer ist als der geringste Querschnitt des anderen Ablasskanals. Vorzugsweise ist auch dieser zweite Ablasskanal in dem Steuermodul ausgebildet. Vorzugsweise ist auch der zweite Ablasskanal, beziehungsweise Alarmprobenkanal mittels eines Absperrorgans wahlweise sperrbar oder freigebbar.

In einer bevorzugten alternativen Ausgestaltung der Erfindung, die mit lediglich einem dedizierten Ablasskanal auskommt, ist das Absperrorgan vorzugsweise zusätzlich in die Alarmprobestellung schaltbar, in welcher der Ablasskanal in Richtung seines Auslasses mit dem relativ zu der Ablassstellung reduzierten Querschnitt freigegeben ist.

Vorzugsweise ist hierbei der Ablasskanal, vom Absperrorgan aus gesehen, einlassseitig mit einem ersten und einem zweiten Zweigkanal versehen, die jeweils fluidleitend mit der Fluidaustrittkammer verbunden sind, wobei in der Ablassstellung des Absperrorgans wenigstens der erste Zweigkanal und der Auslass des Ablasskanals miteinander fluidleitend kommunizieren, in der Alarmprobenstellung des Absperrorgans ausschließlich der zweite Zweigkanal mit dem Auslass des Ablasskanals fluidleitend kommuniziert, und in der Sperrstellung des Absperrorgans weder der erste noch der zweite Zweigkanal mit dem Auslass des Ablasskanals kommunizieren. Der Vorteil eines einzelnen Ablasskanals mit einem einlassseitig ersten und zweiten Zweigkanal liegt in der weiteren Verringerung des benötigten Bauraumes.

Vorzugsweise ist in dem zweiten Zweigkanal ein zusätzliches Sperrorgan angeordnet, mit welchem in der Alarmprobestellung eine Alarmprobe ausgelöst werden kann. Das Absperrorgan im Ablasskanal weist vorzugsweise einen kugelförmigen Ventilkörper auf, der einen ersten Durchgang aufweist, welcher sich vollständig durch den Ventilkörper hindurch erstreckt, und einen zweiten Durchgang, der in einem Winkel zu dem ersten Durchgang ausgerichtet ist, und vorzugsweise in den ersten Durchgang mündet.

Bei einer Ausgestaltung mit nur einem Ablasskanal ist die Querschnittsreduzierung vorzugsweise im Ablasskanal und/oder im Absperrorgan ausgebildet.

Die Querschnittsreduzierung, entweder im zweiten Ablasskanal oder im vorstehend bezeichneten reduzierten Querschnittsbereich des Ablasskanals oder Absperrorgans, ist vorzugsweise derart dimensioniert, dass der durch die Querschnittsreduzierung erzeugte Strömungswiderstand demjenigen eines typischen, bzw. eines dem Feuerlöschanlagenventils in installiertem Zustand zugeordneten Sprinklers oder Sprühwasserventils, zumindest nahe kommt. Unter der Zuordnung wird eine stromabwärtige Anordnung in der Feuerlöschanlage verstanden, die fluidleitend mit dem Feuerlöäschanlagenventil in Verbindung steht. Unter dem Nahekommen wird verstanden, dass der Strömungswiderstand, der durch die Querschnittsreduzierung erzielt wird, um weniger als 50% von dem Strömungswiderstand eines typischen bzw. zugeordneten Sprinklers oder Sprühwasserventils abweicht. Die Strömungswiderstände von Sprinklern und Sprühwasserventilen sind typischerweise normiert. Bei Sprinklern wird der Strömungswiderstand über den sog. K-Faktor ausgedrückt, welcher eine Düsenkonstante bei einem gewissen Volumenstrom des Sprinklers beziehungsweise der Düse darstellt und mittels der Formel

$$K = Q / \sqrt{p}$$

berechnet wird, mit

K als der Düsenkonstante,
Q als Volumenstrom (L/min) und
p als Druck an der Düse/dem Sprinkler (in bar).

Für einen Volumenstrom von 171 Liter pro Minute unter einem Betriebsdruck von 9 bar ergäbe sich beispielsweise ein K-Faktor von K=57. Die K-Faktoren der Sprinkler sind im Regelfall in Baugrößen der Sprinkler, klassifiziert durch das Sprinkleranschlussgewinde, zugeordnet, so würde beispielsweise der vorstehend angegebene K-Faktor von K=57 einem Sprinkleranschlussgewinde von 3/8" DN10 zugeordnet.

Bei einem typischen Sprinkler liegt der K-Faktor vorzugsweise in einem Bereich von K=85 oder weniger, besonders bevorzugt K=57 oder weniger. Dementsprechend weist die Querschnittsreduzierung in bevorzugten Ausführungsformen vorzugsweise einen K-Faktor von 85 oder weniger, besonders bevorzugt von 57 oder weniger auf.

In einer weiteren bevorzugten Ausführungsform ist in dem Gehäuse, insbesondere in dem Steuermodul, ein Bypasskanal ausgebildet, der die Fluideintrittskammer und die Fluidaustrittskammer fluidleitend miteinander verbindet, wobei vorzugsweise in dem Bypasskanal ein Absperrorgan zum wahlweisen Sperren oder Freigeben des Bypasskanals vorgesehen ist. Mittels des in das Gehäuse integrierten Bypasskanals ist es möglich, Löschmittel ohne Öffnen des Schließkörpers im Gehäuse des Feuerlöschanlagenventils von der Fluideintrittsseite zur Fluidaustrittseite zu transportieren, um etwa Druckschwankungen, die sich aufgrund von Temperaturveränderungen ergeben, auszugleichen.

In einer weiteren bevorzugten Ausführungsform ist in dem Gehäuse, insbesondere in dem Steuermodul, ein Direktalarmkanal vorgesehen, der einlassseitig direkt fluidleitend mit der Fluideintrittskammer verbunden ist und ein aus dem Gehäuse, insbesondere Steuermodul, herausführenden Auslass aufweist, der zum Anschluss an eine externe Alarmleitung, insbesondere einer Alarmglockenleitung, eingerichtet ist, wobei vorzugsweise in den Direktalarmkanal ein Absperrorgan angeordnet ist, das wahlweise in eine Sperrstellung oder eine Freigabestellung schaltbar ist. In der Sperrstellung des Absperrorgans am Direktalarmkanal ist der Direktalarmkanal verschlossen. In der Freigabestellung ist die Fluideintrittskammer fluidleitend mit dem Direktalarmkanal-Auslass verbunden.

Durch den Direktalarmkanal wird es möglich, ohne externe Apparaturen am Feuerlöschanlagenventil beziehungsweise der Ventilstation eine Direktalarmierung vorzunehmen, worunter wie eingangs bereits erläutert, eine Auslösung der Alarmmittel ohne vorheriges Öffnen des Schließkörpers des Feuerlöschanlagenventils zu verstehen ist.

In einer weiteren bevorzugten Ausführungsform ist in dem Gehäuse, vorzugsweise in dem Gehäusegrundkörper und/oder dem Steuermodul ein Alarmkanal angeordnet, wobei der Alarmkanal derart angeordnet und ausgebildet ist, dass er im Sperrzustand des Schließkörpers ebenfalls gesperrt ist, nämlich besonders bevorzugt durch den Schließkörper selbst, und bei geöffnetem Schließkörper geflutet wird, wobei der Alarmkanal sich durch das Gehäuse insbesondere durch das Steuermodul hindurch erstreckt, und einen aus dem Gehäuse, insbesondere Steuermodul, herausführenden Auslass aufweist, der zum Anschluss an eine externe Alarmleitung, insbesondere eine Alarmglockenleitung eingerichtet ist.

Die Erfindung wurde vorstehend anhand eines ersten Aspekts unter Bezugnahme auf das Feuerlöschanlagenventil selbst beschrieben.

Die Erfindung betrifft in einem weiteren Aspekt aber auch ein Steuermodul für ein Feuerlöschanlagenventil, insbesondere Nassalarm-, Trockenalarm-, oder Sprühwasserventil.

Die Erfindung löst die ihr zugrundeliegende, eingangs angegebene Aufgabe, indem das Steuermodul für einen Gehäusegrundkörper des Gehäuses des Feuerlöschanlagenventils gemäß einer der vorstehend beschriebenen bevorzugten Ausführungsformen bereitgestellt wird. Das Steuermodul weist Befestigungsmittel zum reversibel lösbaren Verbinden mit korrespondierenden Befestigungsmitteln eines Gehäusegrundkörpers des Feuerlöschanlagenventils auf, sowie einen dedizierten Ablasskanal, der wenigstens einen Einlass und einen Auslass aufweist, und in das Steuermodul integriert ist, wobei der wenigstens eine Einlass und der Auslass derart angeordnet sind, dass bei mit dem Steuermodul verbundenem Gehäusegrundkörper der wenigstens eine Einlass mit einer Fluidaustrittskammer des Feuerlöschanlagenventils verbunden ist, und ist dazu eingerichtet, wahlweise den dedizierten Ablasskanal in einer Ablassstellung in Richtung seines Auslasses freizugeben oder in einer Sperrstellung fluiddicht in Richtung seines Auslasses zu verschließen, und in einer Alarmprobenstellung Flöschfluid über einen Kanalabschnitt mit einem Querschnitt aus der Fluidaustrittskammer abzuführen, der geringer ist als der geringste Querschnitt des dedizierten Ablasskanals.

Das erfindungsgemäße Steuermodul macht sich die Vorteile und bevorzugten Ausführungsformen des erfindungsgemäßen Feuerlöschanlagenventils zunutze. Die bevorzugten Ausführungsformen und Weiterbildungen des Feuerlöschanlagenventils sind daher zugleich bevorzugte Ausführungsformen und Weiterbildungen des Steuermoduls, weswegen diesbezüglich auf die obigen Ausführungen verwiesen wird.

In einem weiteren Aspekt betrifft die Erfindung eine Feuerlöschanlage, insbesondere Sprinkleranlagen, mit einer oder mehreren Fluidleitungen, in denen ein Feuerlöschanlagenventil zum Sperren oder Freigeben der Fluidleitung angeordnet ist. Die Erfindung löst die ihr zugrundeliegende Aufgabe bei einer solchen Feuerlöschanlage, indem sie ein Feuerlöschanlagenventil nach einer der vorstehend beschriebenen bevorzugten Ausführungsformen aufweist.

Wie auch das Steuermodul macht sich die Feuerlöschanlage gemäß der Erfindung die Vorteile und bevorzugten Ausführungsformen und Weiterbildungen des erfindungsgemäßen Feuerlöschanlagenventils zunutze, so dass bevorzugte Ausführungsformen und Weiterbildungen des Feuerlöschanlagenventils zugleich bevorzugte Ausführungsformen und Weiterbildungen der Feuerlöschanlage sind. Diesbezüglich wird wiederum auf die obigen Ausführungen verwiesen.

Die Erfindung wird nachfolgend unter Bezugnahme auf die beigefügten Figuren anhand eines bevorzugten Ausführungsbeispiels näher beschrieben. Hierbei zeigen:

Fig. 1    ein Feuerlöschanlagenventil in einer bevorzugten Ausführungsform in einer schematischen räumlichen Ansicht,

Fig. 2    eine schematische räumliche Ansicht eines Teils des Feuerlöschanlagenventils gemäß Figur 1,

Fig. 3    eine räumliche Ansicht eines weiteren Teils des Feuerlöschanlagenventils gemäß Figur 1,

Fig. 4    eine Seitenprojektion des Teils aus Figur 3,

Fig. 5    eine weitere Seitenansicht des Teils gemäß den Figuren 3 und 4 in einer Schnittdarstellung, und

Fig. 6    eine schematische Darstellung einer erfindungsgemäßen Feuerlöschanlage in einer bevorzugten Ausführungsform.

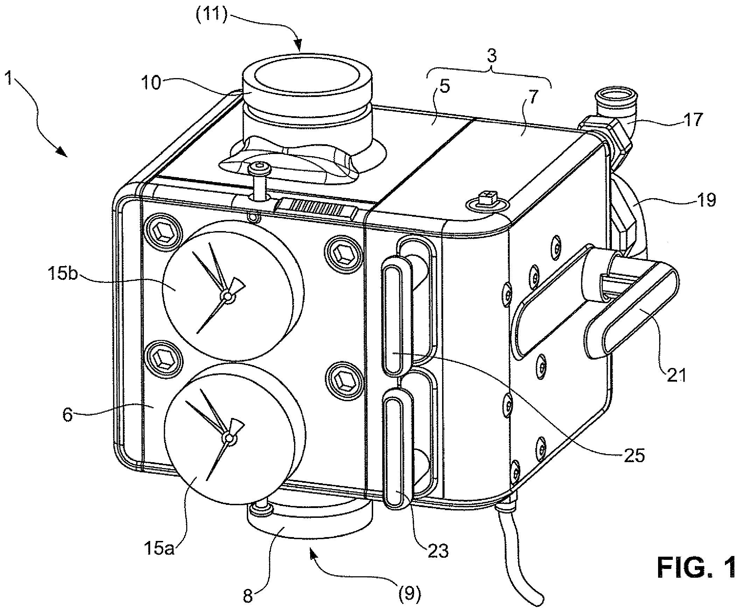

In Figur 1 ist ein Feuerlöschanlagenventil 1 gezeigt. Das Feuerlöschanlagenventil 1 weist ein Gehäuse 3 auf. Das Gehäuse 3 umfasst einen Gehäusegrundkörper 5 und ein Steuermodul 7, welches reversibel lösbar mit dem Gehäusegrundkörper 5 verbunden ist, vorzugsweise mittels Verschraubungen.

An dem Gehäusegrundkörper 5 ist eine Frontplatte 6 montiert.

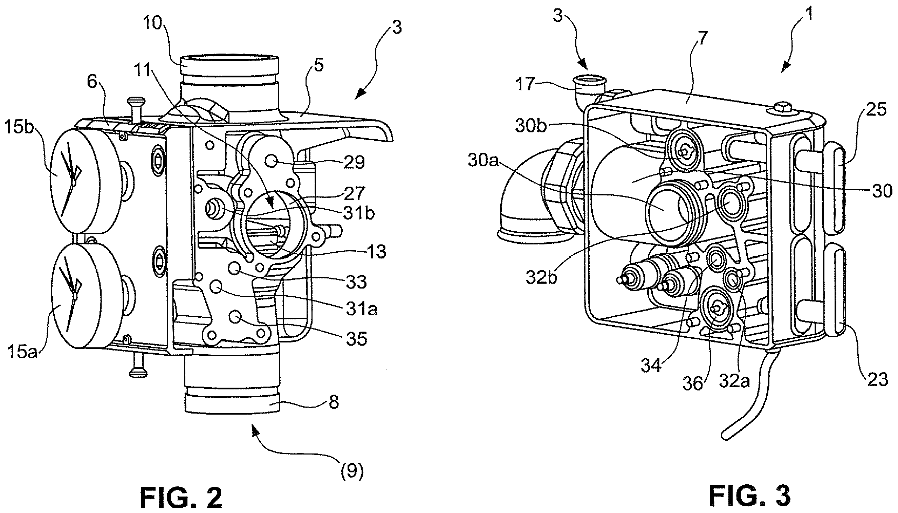

Das Gehäuse 3 weist an dem Gehäusegrundkörper 5 einen einlassseitigen Anschlussstutzen 8 und einen auslassseitigen Anschlussstutzen 10 auf. Der einlassseitige Anschlussstutzen 8 wird in eine Fluideintrittskammer 9 (nicht dargestellt). Der auslassseitige Anschlussstutzen 10 führt in eine Fluidaustrittskammer 11 (vgl. Figur 2).

An der Frontplatte 6 sind ein erstes und zweites Manometer 15a,b angeordnet, wobei das erste Manometer 15a den Druck in der Fluideinlasskammer 9 anzeigt, und das zweite Manometer 15b den Druck in der Fluidaustrittskammer 11.

Am Steuermodul 7 ist ein erster Anschlussstutzen 17 angeordnet, der zur Verbindung mit einer Alarmleitung eingerichtet ist. Ein zweiter Anschlussstutzen 19 ist zur Verbindung mit einer Ablassleitung eingerichtet.

Das Steuermodul 7 weist insgesamt drei Absperrorgane 21, 23, 25 auf, die jeweils mit Handhabungsmitteln, hier Drehgriffen, wirkverbunden sind, welche am Gehäuse angeordnet sind. Das erste Absperrorgan 21 dient zum selektiven Verschließen und Freigeben eines im Gehäuseinneren angeordneten Ablasskanals. Das zweite Absperrorgan 23 dient zum selektiven Verschließen oder Freigeben eines Direktalarmkanals. Das dritte Absperrorgan 25 dient zum selektiven Verschließen oder Freigeben eines Alarmprobekanals. Die interne Wirkweise und die einzelnen Kanäle werden in den folgenden Figuren näher beschrieben.

Figur 2 zeigt den Gehäusegrundkörper 5 bei geöffnetem Gehäuse 3.

An dem Gehäusegrundkörper 5 sind ein erster und zweiter Anschluss 27, 29 ausgebildet, die fluidleitend mit der Fluidaustrittskammer 11 verbunden sind.

Figur 2 gibt auch den Blick frei auf einen Schließkörper 13, der im gezeigten Sperrzustand das unmittelbare Übertreten von Löschmittel von der Fluideintrittskammer 9 in die Fluidaustrittskammer 11 und umgekehrt unterbindet.

In dem Gehäusegrundkörper 5 sind zwei Bypassanschlüsse 31a, 31b ausgebildet, von denen der erste Bypassanschluss 31a fluidleitend mit der Fluideintrittskammer 9 in Verbindung steht, während der zweite Bypassanschluss 31b mit der Fluidaustrittskammer 11 in Verbindung steht.

Dem Gehäusegrundkörper 5 ist ferner ein Alarmkanalanschluss 33 ausgebildet, der derart in die Fluideintrittskammer hineinführt, dass er im Sperrzustand des Schließkörpers 13 von diesem Verschlossen wird, und bei Öffnen des Schließkörpers 13 freigegeben ist und fluidleitend mit der Fluideintrittskammer 9 in Verbindung steht.

Ferner ist am Gehäusegrundkörper 5 ein Direktalarmanschluss 35 ausgebildet, der fluidleitend mit der Fluideintrittskammer 9 in Verbindung steht.

Figur 3 zeigt komplementär zu Figur 2 den zweiten Teil des Gehäuses 3, nämlich das Steuermodul 7. Das Steuermodul 7 weist eine Reihe von Kanälen auf, die mit den vorstehend in Figur 2 gezeigten und beschriebenen Anschlüssen korrespondieren.

Das Steuermodul 7 weist einen Ablasskanal 30 auf, der einen ersten Einlass 30a und einen zweiten Einlass 30b aufweist. Der erste Einlass 30a des Ablasskanals 30 ist zum Anschluss an den ersten Anschluss 27 des Gehäusegrundkörpers 5 angepasst, während der zweite Einlass 30b zum Anschluss an den zweiten Anschluss 29 des Gehäusegrundkörpers 5 angepasst ist.

Das Steuermodul 7 weist ferner einen Bypasseinlass 32a und einen Bypassauslass 32b auf, wobei der Bypasseinlass 32a zum Anschluss an den ersten Bypassanschluss 31a im Gehäusegrundkörper 5 angepasst ist und der Bypassauslass 32b zum Anschluss an den zweiten Bypassanschluss 31b in Gehäusegrundkörper 5 angepasst ist.

Das Steuermodul 7 weist ferner einen Alarmkanaleinlass 34 auf, der zum Anschluss an den Alarmkanalanschluss 33 im Gehäusegrundkörper 5 angepasst ist. Ferner weist das Steuermodul 7 einen Direktalarmkanaleinlass 36 auf, der zum Anschluss an den Direktalarmanschluss 35 in Gehäusegrundkörper 5 angepasst ist.

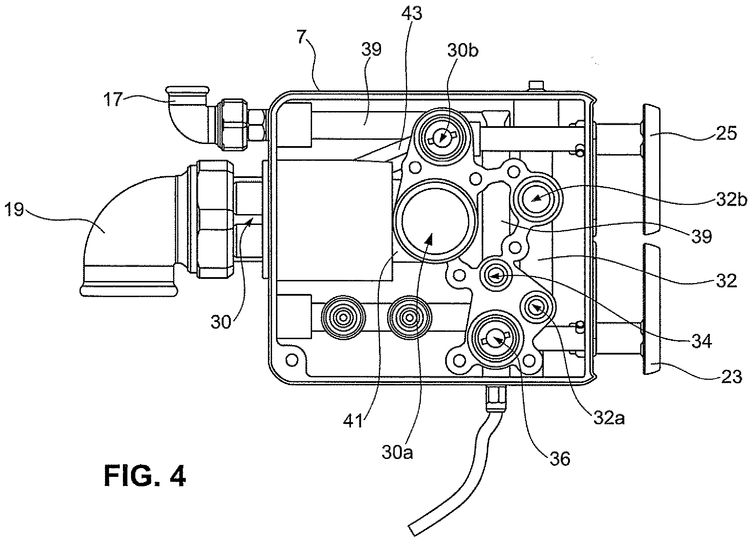

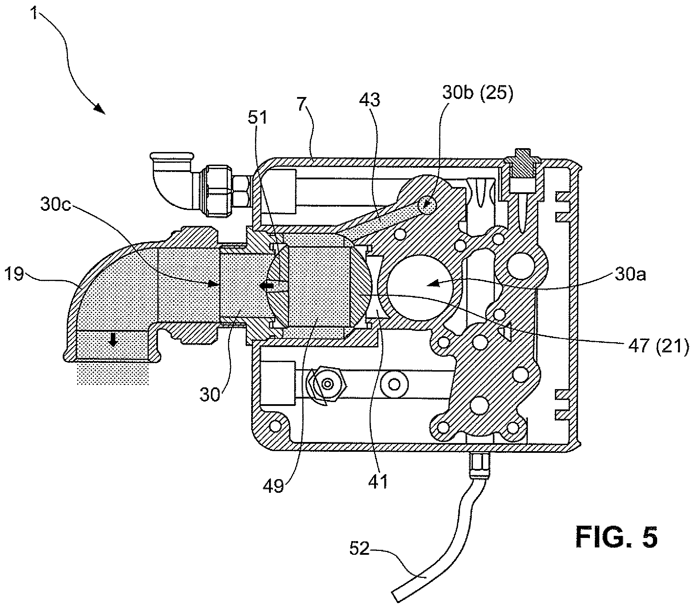

Der Verlauf der einzelnen Kanäle im Inneren des Steuermoduls ist in den Figuren 4 und 5 veranschaulicht. Im Anschluß an 31b ist vorzugsweise ein innenliegender Rückflußverhinderer im Gehäuse reversibel integriert. Dadurch ist eine Rückströmung von der Fluidaustrittskammer 11 zu Fluideintrittskammer 9 verhindert. Der Bypasseinlass 32a und der Bypassauslass 32b sind mittels eines Bypasskanals 32 im Inneren des Steuermoduls fluidleitend verbunden.

Der Alarmkanaleinlass 34 und der Direktalarmkanaleinlass 36 münden jeweils in einem im Inneren des Steuermoduls angeordneten Alarmkanal 39, der zum Anschlussstutzen 17 aus dem Gehäuse hinausgeführt wird. Die fluidleitende Verbindung zwischen dem Alarmkanal 39 und dem Direktalarmkanaleinlass 36 ist mittels des Absperrorgans 23 selektiv trennbar beziehungsweise freigebbar.

Der erste Ablasskanaleinlass 30a mündet in eine erste Zweigleitung 41 des Ablasskanals 30, während der zweite Ablasskanaleinlass 30b in eine zweite Zweigleitung 43 mündet, die ihrerseits in den Ablasskanal 30 hinein mündet. Der Ablasskanal 30 wird zu dem Anschlussstutzen 19 hin aus dem Gehäuse hinaus geführt.

Der zweite Ablasskanaleinlass 30b ist mittels des Absperrorgans 21 selektiv freiggebbar beziehungsweise sperrbar.

Die Realisierung der Ablassfunktion und der Alarmprobefunktion wird anhand Figur 5 näher erläutert. Ein Schlauch 52 ist für den Ablass von Flüssigkeit aus dem Alarmkanal 39 an dem Gehäusegrundkörper 5 montiert.

Das Absperrorgan 21 (Figur 1) ist mit einem Kugelelement 47 wirkverbunden. Das Kugelelement 47 ist in der in Figur 5 gezeigten Stellung in eine Alarmprobeposition geschaltet. In der gezeigten Stellung ist die fluidleitende Verbindung zwischen dem ersten Ablasskanaleinlass 30a und einem Auslass 30c des Ablasskanals 30 unterbrochen, während Löschmittel durch den zweiten Ablasskanaleinlass 30b und die zweite Zweigleitung 43 in den Ablasskanal 30 strömen kann.

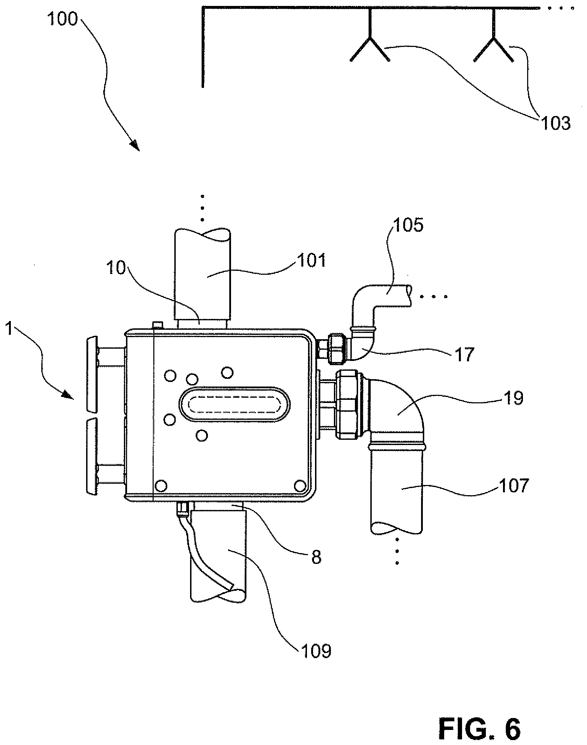

Das Absperrorgan 21 weist in dem Kugelelement 47 einen ersten Durchgang 49 mit einem ersten Querschnitt auf, sowie einen zweiten Durchgang 51 mit einem zweiten, geringeren Querschnitt. Der erste Durchgang 49 erstreckt sich vollständig durch das Kugelelement 47 hindurch, während der zweite Durchgang 51 im ersten Durchgang 49 mündet. Der durch die Querschnittsreduzierung im zweiten Durchgang 51 und/oder der zweiten Zweigleitung 43 erzielte Strömungswiderstand resultiert vorzugsweise in einem K-Faktor im Bereich von $K \leq 85$, vorzugsweise $K \leq 57$ sodass mit dem Schalten des Absperrorgans 25 in die Alarmprobenstellung das Aktivieren eines Sprinklers 103 (Fig. 6) simuliert wird.

Wird das Absperrorgan 21 in seine Ablassstellung geschaltet, nimmt die Kugel 47 eine im Vergleich zu dem Zustand gemäß Figur 5 um 90° gedrehte Position ein, in der der erste Durchgang 49 fluchtend auf die erste Zweigleitung 41 des Ablasskanals 30 ausgerichtet ist. Löschmittel kann dann durch den ersten Durchgang mit vollem Querschnitt hindurch strömen und durch den Auslass 30c des Ablasskanals 30 zum Anschlussstutzen 19 gelangen, wobei ein deutlich größerer Volumenstrom erreicht wird als in der Alarmprobenstellung.

Wird ausgehend davon das Absperrorgan 21 um weitere 90° gedreht, so dass die Kugel 47 eine relativ zu dem Zustand gemäß Figur 5 um 180° gedrehte Position annimmt, ist der Ablasskanal 30 auslassseitig fluiddicht verschlossen, so dass kein Löschmittel zum Auslass 30c strömen kann. Es besteht zwar eine fluidleitende Verbindung zwischen der ersten und zweiten Zweigleitung 41, 43 und somit zwischen den beiden Ablasskanaleinlässen 30a, b. Da diese jedoch beide fluidleitend mit der Fluidaustrittskammer in Verbindung stehen, ist selbst für den Fall, dass das Absperrorgan 25 in die Sperrstellung geschaltet ist, ein ungewollter Fluidaustritt aus dem Feuerlöschanlagenventil 1 nicht zu befürchten.

In Figur 6 ist schließlich schematisch der Einbau des Feuerlöschanlagenventils 1 gemäß der Erfindung in eine Feuerlöschanlage 100 gezeigt. Die Feuerlöscheinlage 100 weist eine Löschmittelversorgung 109 auf, die fluidleitend mittels des Anschlussstutzens 8 an das Feuerlöschanlagenventil 1 angeschlossen ist. Auslassseitig weist die Feuerlöschanlage 100 eine oder mehrere Rohrleitungen 101 auf, die mittels des Anschlussstutzens 10 mit dem Feuerlöschanlagenventil 1 verbunden sind.

Über den Ablass-Anschlussstutzen 19 ist vorzugsweise eine Ablassleitung 107 oder ein Auffangbehälter an das Feuerlöschanlagenventil 1 angeschlossen. Über den Alarmkanalanschlussstutzen 17 ist vorzugsweise eine Alarmleitung 105 mit dem Feuerlöschanlagenventil 1 verbunden.

Die Rohrleitung 101 führt zu einem oder mehreren Sprinklern 103, die dazu eingerichtet sind, Temperaturanstiege in von ihnen überwachten Bereichen zu registrieren und bei Überschreiten vorbestimmter Temperaturen auszulösen.

Der Schließkörper 13 des Feuerlöschanlagenventils 1 wird von seiner Querstellung (Figur 2) in eine Freigabestellung bewegt, sobald aufgrund des Ausströmens des Löschmittels aus den Sprinklern 103 ein vorbestimmter Druckwert in der Rohrleitung 101 unterschritten wird. Durch Öffnen des Schließkörpers 13 kann auch Löschmittel durch den Alarmkanal 39 im Inneren des Feuerlöschanlagenventils hin zur Alarmleitung 105 schwimmen, so dass eine entsprechende Alarmierung erfolgt.

Bezugszeichenliste:

| 1 | Feuerlöschanlagenventil |
|---|---|
| 3 | Gehäuse |
| 5 | Gehäusegrundkörper |
| 6 | Frontplatte |
| 7 | Steuermodul |
| 8 | Anschlussstutzen (einlassseitig) |
| 9 | Fluideintrittskammer |
| 10 | Anschlussstutzen (auslassseitig) |
| 11 | Fluidaustrittskammer |
| 13 | Schließkörper |
| 15a,b | Manometer |

| 17 | Anschlussstutzen (Alarmleitung) |
| 19 | Anschlussstutzen (Ablassleitung) |
| 21 | Absperrorgan (Ablasskanal) |
| 23 | Absperrorgan (Direktalarmkanal) |
| 25 | Absperrorgan (Alarmprobekanal) |
| 27 | Erster Anschluss (Fluidaustrittskammer) |
| 29 | Zweiter Anschluss (Fluidaustrittskammer) |
| 30 | Ablasskanal |
| 30a | Erster Einlass (Ablasskanal) |
| 30b | Zweiter Einlass (Ablasskanal) |
| 30c | Auslass (Ablasskanal) |
| 31a | Bypassanschluss (Fluideintrittskammer) |
| 31b | Bypassanschluss (Fluidaustrittskammer) |
| 32 | Bypasskanal |
| 32a | Bypasseinlass |
| 32b | Bypassauslass |
| 33 | Alarmkanalanschluss |
| 34 | Alarmkanaleinlass |
| 35 | Direktalarmanschluss |
| 36 | Direktalarmkanaleinlass |
| 39 | Alarmkanal |
| 41 | Erste Zweigleitung (Ablasskanal) |
| 43 | Zweite Zweigleitung (Ablasskanal) |
| 47 | Kugelelement (Absperrorgan) |
| 49 | Erster Durchgang |
| 51 | Zweiter Durchgang |
| 52 | Schlauch |
| 100 | Feuerlöschanlage |
| 101 | Rohrleitung |
| 103 | Sprinkler |
| 105 | Alarmleitung |
| 107 | Ablassleitung |
| 109 | Löschmittelversorgung |

**Patentansprüche**

1. Feuerlöschanlagenventil (1), insbesondere Nassalarm-, Trockenalarm-, oder Sprühwasserventil, mit

   - einem Gehäuse (3), welches eine Fluideintrittskammer (9), eine Fluidaustrittskammer (11) und einen zwischen einem Sperrzustand und einem Freigabezustand hin- und her bewegbaren Schließkörper (13) aufweist,
   - wobei die Fluideintrittskammer (9) und die Fluidaustrittskammer (11) im Freigabezustand fluidleitend unmittelbar miteinander kommunizieren, und der Schließkörper (13) im Sperrzustand die unmittelbare Kommunikation zwischen der Fluideintrittskammer (9) und der Fluidaustrittskammer (11) unterbindet,
   **dadurch gekennzeichnet, dass** das Gehäuse (3) einen dedizierten Ablasskanal (30) aufweist, der wenigstens einen mit der Fluidaustrittskammer (11) verbundenen Einlass (30a,b) und einen aus dem Gehäuse (3) des Feuerlöschanlagenventils (1) herausführenden Auslass (30c) aufweist, und der in das Gehäuse (3) integriert ist, und
das Gehäuse (3) ein Steuermodul (7) aufweist, welches dazu eingerichtet ist,

   - wahlweise den dedizierten Ablasskanal (30) in einer Ablassstellung in Richtung seines Auslasses freizugeben oder in einer Sperrstellung fluiddicht in Richtung seines Auslasses zu verschließen, und
   - in einer Alarmprobenstellung Löschmittel über einen Kanalabschnitt mit einem Querschnitt aus der Fluidaustrittskammer abzuführen, der geringer ist als der geringste Querschnitt des dedizierten Ablasskanals (30).

2. Feuerlöschanlagenventil (1) nach Anspruch 1,

   wobei das Gehäuse (3) einen Gehäusegrundkörper (5) aufweist, in dem die Fluideintrittskammer (9) und die Fluidaustrittskammer (11) ausgebildet sind und der Schließkörper (13) angeordnet ist, und ferner das Steuermodul (7) reversibel lösbar mit dem Gehäusegrundkörper (5) verbunden ist,
   wobei der dedizierte Ablasskanal (30) in dem Steuermodul (7) ausgebildet ist.

3. Feuerlöschanlagenventil nach Anspruch 1 oder 2,

   wobei in dem dedizierten Ablasskanal (30) ein Absperrorgan (21) angeordnet ist,
   welches wahlweise in die Sperrstellung oder die Ablassstellung schaltbar ist.

4. Feuerlöschanlagenventil nach einem der vorstehenden Ansprüche,
   wobei das Absperrorgan (21) zusätzlich in die Alarmprobestellung schaltbar ist, in welcher der Ablasskanal (30) in Richtung seines Auslasses (30c) mit dem relativ zu der Ablassstellung reduzierten Querschnitt freigegeben ist.

5. Feuerlöschanlagenventil nach Anspruch 4,

   wobei der Ablasskanal (30) von dem Absperrorgan (21) aus gesehen einlassseitig einen ersten und einen zweiten Zweigkanal (41, 43) aufweist, die jeweils fluidleitend mit der Fluidaustrittskammer (11) verbunden sind,
   wobei in der Ablassstellung des Absperrorgans (21) wenigstens der erste Zweigkanal (41) und der Auslass (30c) des Ablasskanals miteinander fluidleitend kommunizieren,
   in der Alarmprobenstellung des Absperrorgans ausschließlich der zweite Zweigkanal (43) mit dem Auslass (30c) des Ablasskanals fluidleitend kommuniziert, und

in der Sperrstellung des Absperrorgans weder der erste noch der zweite Zweigkanal mit dem Auslass des Ablasskanals kommunizieren.

6. Feuerlöschanlagenventil nach Anspruch 5,

wobei das Absperrorgan einen vorzugsweise kugelförmigen Ventilkörper (47) aufweist, der einen ersten Durchgang (49) aufweist, der sich vollständig durch den Ventilkörper hindurch erstreckt, und

einen zweiten Durchgang (51) aufweist, der in einem Winkel zu dem ersten Durchgang ausgerichtet ist, und vorzugsweise in den ersten Durchgang mündet.

7. Feuerlöschanlagenventil nach einem der Ansprüche 4 bis 6,

wobei die Querschnittsreduzierung im Ablasskanal und/oder im Absperrorgan ausgebildet ist.

8. Feuerlöschanlagenventil nach einem der Ansprüche 1 bis 3,

wobei der Ablasskanal (30) ein erster Ablasskanal ist, und das Feuerlöschanlagenventil ferner einen zweiten mit der Fluidaustrittskammer fluidleitend verbundenen, in das Gehäuse integrierten und aus dem Gehäuse herausführenden Ablasskanal aufweist, wobei der zweite Ablasskanal als Alarmprobenkanal ausgebildet ist und einen Querschnitt aufweist, der zumindest abschnittsweise geringer ist als der geringste Querschnitt des ersten Ablasskanals.

9. Feuerlöschanlagenventil nach Anspruch 8,
wobei der zweite Ablasskanal in dem Steuermodul ausgebildet ist, und vorzugsweise ein Absperrorgan zum wahlweisen sperren oder freigeben des zweiten Ablasskanals aufweist.

10. Feuerlöschanlagenventil nach einem der vorstehenden Ansprüche,

wobei die Querschnittsreduzierung derart dimensioniert ist, dass der durch die Querschnittsreduzierung erzeugte Strömungswiderstand demjenigen eines dem Feuerlöschanlagenventil zugeordneten Sprinklers oder Sprühwasserventils zumindest nahekommt.

11. Feuerlöschanlagenventil (1) nach einem der vorstehenden Ansprüche,
wobei in dem Gehäuse (3), insbesondere in dem Steuermodul (7), ein Bypasskanal (32) ausgebildet ist, der die Fluideintrittskammer (9) und die Fluidaustrittskammer (11) fluidleitend miteinander verbindet, wobei vorzugsweise in dem Bypasskanal ein Absperrorgan zum wahlweisen Sperren oder Freigeben des Bypasskanals vorgesehen ist.

12. Feuerlöschanlagenventil nach einem der vorstehenden Ansprüche,

wobei in dem Gehäuse, insbesondere in dem Steuermodul, ein Direktalarmkanal (36, 39) vorgesehen ist, der einlassseitig direkt fluidleitend mit der Fluideintrittskammer (9) verbunden ist und einen aus dem Gehäuse, insbesondere Steuermodul herausführenden Auslass (17) aufweist, der zum Anschluss an eine externe Alarmleitung, insbesondere eine Alarmglockenleitung, eingerichtet ist,
wobei vorzugsweise in dem Direktalarmkanal ein Absperrorgan angeordnet ist, das wahlweise in eine Sperrstellung oder eine Freigabestellung schaltbar ist.

13. Feuerlöschanlagenventil nach einem der vorstehenden Ansprüche,
wobei in dem Gehäuse, vorzugsweise in dem Gehäusegrundkörper und/oder dem Steuermodul, ein Alarmkanal (34, 39) angeordnet ist, wobei der Alarmkanal derart angeordnet ist, dass er im Sperrzustand des Schließkörpers (13) ebenfalls gesperrt ist, und bei geöffnetem Schließkörper geflutet wird, wobei der Alarmkanal sich durch das Gehäuse, insbesondere das Steuermodul, hindurch erstreckt und einen aus dem Gehäuse, insbesondere Steuermodul herausführenden Auslass aufweist, der zum Anschluss an eine externe Alarmleitung, insbesondere eine Alarmglockenleitung, eingerichtet ist.

14. Steuermodul (7) für ein Feuerlöschanlagenventil (1), insbesondere Nassalarm-, Trockenalarm-, oder Sprühwasserventil, nach einem der vorstehenden Ansprüche, mit

Befestigungsmitteln zum reversibel lösbaren Verbinden mit korrespondierenden Befestigungsmitteln eines Gehäusegrundkörpers des Feuerlöschanlagenventils, und einem dedizierten Ablasskanal (30), der wenigstens einen Einlass (30a,b) und einen Auslass (30c) aufweist, und in das Steuermodul integriert ist, wobei der wenigstens eine Einlass und der Auslass derart angeordnet sind, dass bei mit dem Steuermodul verbundenem Gehäusegrundkörper (5) der Einlass (30a.b) mit einer Fluidaustrittskammer (11) des Feuerlöschanlagenventils (1) verbunden ist, und welches dazu eingerichtet ist, wahlweise den dedizierten Ablasskanal (30) in einer Ablassstellung in Richtung seines Auslasses freizugeben oder in einer Sperrstellung fluiddicht in Richtung seines Auslasses zu verschließen, und in einer Alarmprobenstellung Löschfluid über einen Kanalabschnitt mit einem Querschnitt aus der Fluidaustrittskammer abzuführen, der geringer ist als der geringste Querschnitt des dedizierten Ablasskanals (30).

15. Feuerlöschanlage (100), insbesondere Sprinkleranlage, mit einer oder mehreren Fluidleitungen (101), in denen ein Feuerlöschanlagenventil (1) zum Sperren und Freigeben der Fluidleitungen (101) angeordnet ist, **dadurch gekennzeichnet, dass** das Feuerlöschanlagenventil (1) nach einem der Ansprüche 1 bis 13 ausgebildet ist.

**Claims**

1. A fire extinguishing system valve (1), in particular wet alarm valve, dry alarm valve or spray water valve, comprising

   - a housing (3) which has a fluid inlet chamber (9), a fluid outlet chamber (11) and a closing body (13) which can move back and forth between a blocking state and a release state,
   - wherein the fluid inlet chamber (9) and the fluid outlet chamber (11) communicate directly with one another in a fluid-conducting manner in the release state, and the closing body (13) prevents the direct communication between the fluid inlet chamber (9) and the fluid outlet chamber (11) in the blocking state,

   **characterized in that** the housing (3) has a dedicated discharge duct (30) which has at least one inlet (30a, b) connected to the fluid outlet chamber (11) and an outlet (30c) leading out of the housing (3) of the fire extinguishing system valve (1), and which is integrated into the housing (3), and the housing (3) has a control module (7) which is configured

   - to selectively release the dedicated discharge duct (30) in a discharge position in the direction of its outlet or, in a blocking position, to close it fluid-tight in the direction of its outlet, and,
   - in an alarm testing position, to remove extinguishing agent from the fluid outlet chamber via a duct portion having a cross section which is smaller than the smallest cross section of the dedicated discharge duct (30).

2. The fire extinguishing system valve (1) as claimed in claim 1,

   wherein the housing (3) has a housing basic body (5) in which the fluid inlet chamber (9) and the fluid outlet chamber (11) are formed and the closing body (13) is arranged, and further the control module (7) is reversibly releasably connected to the housing basic body (5), wherein the dedicated discharge duct (30) is formed in the control module (7).

3. The fire extinguishing system valve as claimed in claim 1 or 2, wherein a shut-off member (21) is arranged in the dedicated discharge duct (30) and can be selectively switched into the blocking position or the discharge position.

4. The fire extinguishing system valve as claimed in one of the preceding claims, wherein the shut-off member (21) can additionally be switched into the alarm testing position in which the discharge duct (30) is released in the direction of its outlet (30c) with the cross section reduced relative to the discharge position.

5. The fire extinguishing system valve as claimed in claim 4,

   wherein, as viewed from the shut-off member (21), the discharge duct (30) has, on the inlet side, a first and a second branch duct (41, 43) which are each connected in a fluid-conducting manner to the fluid outlet chamber (11), wherein at least the first branch duct (41) and the outlet (30c) of the discharge duct communicate with one another in a fluid-conducting manner in the discharge position of the shut-off member (21), exclusively the second branch duct (43) communicates in a fluid-conducting manner with the outlet (30c) of the discharge duct in the alarm testing position of the shut-off member, and neither the first nor the second branch duct communicates with the outlet of the discharge duct in the blocking position of the shut-off member.

6. The fire extinguishing system valve as claimed in claim 5,

   wherein the shut-off member has a preferably ball-shaped valve body (47) which has a first passage (49) which extends completely through the valve body, and has a second passage (51) which is oriented at an angle to the first passage, and preferably opens into the first passage.

7. The fire extinguishing system valve as claimed in one of claims 4 to 6, wherein the cross-sectional reduction is formed in the discharge duct and/or in the shut-off member.

8. The fire extinguishing system valve as claimed in one of claims 1 to 3, wherein the discharge duct (30) is a first discharge duct, and the fire extinguishing system valve further has a second discharge duct which is connected in a fluid-conducting manner to the fluid outlet chamber, is integrated into the housing and leads out of the housing, wherein the second discharge duct is designed as an alarm testing duct and has a cross section which is smaller at least in certain portions than the smallest cross section of the first discharge duct.

9. The fire extinguishing system valve as claimed in claim 8,
wherein the second discharge duct is formed in the control module, and preferably has a shut-off member for selectively blocking or releasing the second discharge duct.

10. The fire extinguishing system valve as claimed in one of the preceding claims, wherein the cross-sectional reduction is dimensioned in such a way that the flow resistance produced by the cross-sectional reduction at least approximates to that of a sprinkler or spray water valve assigned to the fire extinguishing system valve.

11. The fire extinguishing system valve (1) as claimed in one of the preceding claims,
wherein a bypass duct (32) is formed in the housing (3), in particular in the control module (7), and connects the fluid inlet chamber (9) and the fluid outlet chamber (11) to one another in a fluid-conducting manner, wherein a shut-off member for selectively blocking or releasing the bypass duct is preferably provided in the bypass duct.

12. The fire extinguishing system valve as claimed in one of the preceding claims,

wherein a direct alarm duct (36, 39) is provided in the housing, in particular in the control module, and, on the inlet side, is connected directly in a fluid-conducting manner to the fluid inlet chamber (9) and has an outlet (17) which leads out of the housing, in particular control module, and which is configured to connect to an external alarm line, in particular an alarm bell line,
wherein a shut-off member is preferably arranged in the direct alarm duct and can be selectively switched into a blocking position or a release position.

13. The fire extinguishing system valve as claimed in one of the preceding claims, wherein an alarm duct (34, 39) is arranged in the housing, preferably in the housing basic body and/or the control module, wherein the alarm duct is arranged in such a way that it is also blocked in the blocking state of the closing body (13), and is flooded with the closing body opened, wherein the alarm duct extends through the housing, in particular the control module, and has an outlet which leads out of the housing, in particular control module, and is configured to connect to an external alarm line, in particular an alarm bell line.

14. A control module (7) for a fire extinguishing system valve (1), in particular wet alarm valve, dry alarm valve or spray water valve, as claimed in one of the preceding claims, comprising

fastening means for reversibly releasable connection to corresponding fastening means of a housing basic body of the fire extinguishing system valve, and
a dedicated discharge duct (30) which has at least one inlet (30a, b) and an outlet (30c), and is integrated into the control module, wherein the at least one inlet and the outlet are arranged in such a way that, with the housing basic body (5) connected to the control module, the inlet (30a, b) is connected to a fluid outlet chamber (11) of the fire extinguishing system valve (1), and which is configured to selectively release the dedicated discharge duct (30) in a discharge position in the direction of its outlet or, in a blocking position, to close it fluid-tight in the direction of its outlet, and, in an alarm testing position, to remove extinguishing fluid from the fluid outlet chamber via a duct portion having a cross section which is smaller than the smallest cross section of the dedicated discharge duct (30).

15. A fire extinguishing system (100), in particular sprinkler system, comprising one or more fluid lines (101) in which a fire extinguishing system valve (1) for blocking and releasing the fluid lines (101) is arranged,
**characterized in that** the fire extinguishing system valve (1) is designed as claimed in one of claims 1 to 13.

**Revendications**

1. Vanne d'installation d'extinction d'incendie (1), en particulier vanne d'alarme humide, d'alarme sèche ou d'eau de pulvérisation avec

- un boîtier (3) qui présente une chambre d'entrée de fluide (9), une chambre de sortie de fluide (11) et un corps de fermeture (13) mobile alternativement entre un état de blocage et un état de libération,
- dans laquelle la chambre d'entrée de fluide (9) et la chambre de sortie de fluide (11) communiquent entre elles directement de manière à acheminer du fluide dans l'état de libération, et le corps de fermeture (13) empêche, dans l'état de verrouillage, la communication directe entre la chambre d'entrée de fluide (9) et la chambre de sortie de fluide (11),

**caractérisée en ce que** le boîtier (3) présente un canal d'évacuation (30) dédié qui présente au moins une entrée (30a, b) reliée à la chambre de sortie de fluide (11) et une sortie (30c) menant hors du boîtier (3) de la vanne d'installation d'extinction d'incendie (1), et qui est intégré dans le boîtier (3), et le boîtier (3) présente un module de commande (7) qui est conçue afin de
- libérer au choix le canal d'évacuation (30) dédié dans une position d'évacuation en direction de sa sortie ou de le fermer dans une position de blocage de manière étanche au fluide en direction de sa sortie, et
- d'évacuer, dans une position d'essai d'alarme, des moyens d'extinction, par le biais d'une section de canal avec une section transversale, hors de la chambre de sortie de fluide, qui est plus petite que la section transversale la plus petite du canal d'évacuation (30) dédié.

2. Vanne d'installation d'extinction d'incendie (1) selon la revendication 1,
dans laquelle le boîtier (3) présente un corps de base de boîtier (5), dans lequel la chambre d'entrée de fluide (9) et la chambre de sortie de fluide (11) sont réalisées et le corps de fermeture (13) est agencé, et en plus ledit module de commande (7) est relié de manière détachable et réversible au corps de base de boîtier (5), dans laquelle le canal d'évacuation (30) dédié est réalisé dans le module de commande (7).

3. Vanne d'installation d'extinction d'incendie selon la revendication 1 ou 2,
dans laquelle un organe de blocage (21) est agencé dans le canal d'évacuation (30) dédié, lequel est commutable au choix dans la position de blocage ou la position d'évacuation.

4. Vanne d'installation d'extinction d'incendie selon l'une quelconque des revendications précédentes,
dans laquelle l'organe de blocage (21) est commutable en outre dans la position d'essai d'alarme, dans laquelle le canal d'évacuation (30) est libéré en direction de sa sortie (30c) avec la section transversale réduite par rapport à la position d'évacuation.

5. Vanne d'installation d'extinction d'incendie selon la revendication 4,

dans laquelle le canal d'évacuation (30) présente, vu depuis l'organe de blocage (21) côté entrée, un premier et un second canal de ramification (41, 43) qui sont reliés respectivement de manière à acheminer le fluide à la chambre de sortie de fluide (11),
dans laquelle, dans la position d'évacuation de l'organe de blocage (21), au moins le premier canal de ramification (41) et la sortie (30c) du canal d'évacuation communiquent de manière à acheminer le fluide entre eux,
dans la position d'essai d'alarme de l'organe de blocage, exclusivement le second canal de ramification (43) communique avec la sortie (30c) du canal d'évacuation de manière à acheminer le fluide, et
dans la position de blocage de l'organe de blocage, ni le premier ni le second canal de ramification ne communiquent avec la sortie du canal d'évacuation.

6. Vanne d'installation d'extinction d'incendie selon la revendication 5,

dans laquelle l'organe de blocage présente un corps de vanne (47) de préférence sphérique qui présente un premier passage (49) qui s'étend complètement à travers le corps de vanne, et
présente un second passage (51) qui est orienté selon un angle par rapport au premier passage, et débouche de préférence dans le premier passage.

7. Vanne d'installation d'extinction d'incendie selon l'une quelconque des revendications 4 à 6,
dans laquelle la réduction de section transversale est réalisée dans le canal d'évacuation et/ou dans l'organe de blocage.

8. Vanne d'installation d'extinction d'incendie selon l'une quelconque des revendications 1 à 3,
dans laquelle le canal d'évacuation (30) est un premier canal d'évacuation, et la vanne d'installation d'extinction d'incendie présente de plus un second canal d'évacuation relié de manière à acheminer le fluide à la chambre de sortie de fluide, intégré dans le boîtier et menant hors du boîtier, dans laquelle le second canal d'évacuation est réalisé comme canal d'essai d'alarme et présente une section transversale qui est plus petite au moins par sections que la section transversale la plus petite du premier canal d'évacuation.

9. Vanne d'installation d'extinction d'incendie selon la revendication 8,
dans laquelle le second canal d'évacuation est réalisé dans le module de commande, et de préférence présente un organe de blocage pour le blocage ou la libération au choix du second canal d'évacuation.

10. Vanne d'installation d'extinction d'incendie selon l'une quelconque des revendications précédentes, dans laquelle la réduction de section transversale est dimensionnée de telle manière que la résistance à l'écoulement générée par la réduction de section transversale se rapproche au moins de celle d'un gicleur d'incendie ou vanne d'eau de pulvérisation associée à la vanne d'installation d'extinction d'incendie.

11. Vanne d'installation d'extinction d'incendie (1) selon l'une quelconque des revendications précédentes, dans laquelle, dans le boîtier (3), en particulier dans le module de commande (7), un canal de dérivation (32) est réalisé, lequel relie de manière à acheminer le fluide la chambre d'entrée de fluide (9) et la chambre de sortie de fluide (11) entre elles, dans laquelle de préférence, dans le canal de dérivation, un organe de blocage est prévu pour le blocage ou la libération au choix du canal de dérivation.

12. Vanne d'installation d'extinction d'incendie selon l'une quelconque des revendications précédentes, dans laquelle, dans le boîtier, en particulier dans le module de commande, un canal d'alarme direct (36, 39) est prévu, lequel est relié côté entrée directement, de manière à acheminer le fluide, à la chambre d'entrée de fluide (9) et présente une sortie (17) menant hors du boîtier, en particulier du module de commande, qui est conçue pour le raccordement à une conduite d'alarme externe, en particulier une conduite de sonnette d'alarme, dans laquelle un organe de blocage est de préférence agencé dans le canal d'alarme direct, lequel est commutable au choix dans une position de blocage ou une position de libération.

13. Vanne d'installation d'extinction d'incendie selon l'une quelconque des revendications précédentes, dans laquelle un canal d'alarme (34, 39) est agencé dans le boîtier, de préférence dans le corps de base de boîtier et/ou le module de commande, dans laquelle le canal d'alarme est agencé de telle manière qu'il soit bloqué aussi dans l'état de blocage du corps de fermeture (13), et qu'il soit inondé quand le corps de fermeture est ouvert, dans lequel le canal d'alarme s'étend à travers le boîtier, en particulier le module de commande, et présente une sortie menant hors du boîtier, en particulier du module de commande, qui est conçue pour le raccordement à une conduite d'alarme externe, en particulier une conduite de sonnette d'alarme.

14. Module de commande (7) pour une vanne d'installation d'extinction d'incendie (1), en particulier vanne d'alarme humide, d'alarme sèche ou d'eau de pulvérisation selon l'une quelconque des revendications précédentes, avec

des moyens de fixation pour la liaison amovible et réversible avec des moyens de fixation correspondants d'un corps de base de boîtier de la vanne d'installation d'extinction d'incendie, et un canal d'évacuation (30) dédié qui présente au moins une entrée (30a, b) et une sortie (30c), et est intégré dans le module de commande, dans lequel

l'au moins une entrée et la sortie sont agencées de telle manière qu'en cas de corps de base de boîtier (5) relié au module de commande, l'entrée (30a.b) est reliée à une chambre de sortie de fluide (11) de la vanne d'installation d'extinction d'incendie (1), et qui est conçu afin de libérer au choix le canal d'évacuation (30) dédié dans une position de sortie en direction de sa sortie ou de le fermer dans une position de blocage de manière étanche au fluide en direction de sa sortie, et d'évacuer, dans une position d'essai d'alarme, du fluide d'extinction par le biais d'une section de canal avec une section transversale, hors de la chambre de sortie de fluide, qui est plus petite que la section transversale la plus petite du canal d'évacuation (30) dédié.

15. Installation d'extinction d'incendie (100), en particulier installation de gicleur d'incendie, avec une ou plusieurs conduites de fluide (101), dans lesquelles une vanne d'installation d'extinction d'incendie (1) est agencée pour le blocage et la libération des conduites de fluide (101),
**caractérisée en ce que** la vanne d'installation d'extinction d'incendie (1) est réalisée selon l'une quelconque des revendications 1 à 13.

**FIG. 1**

EP 3 661 609 B1

13

**FIG. 2**

**FIG. 3**

EP 3 661 609 B1

FIG. 4

FIG. 5

**FIG. 6**

**IN DER BESCHREIBUNG AUFGEFÜHRTE DOKUMENTE**

**In der Beschreibung aufgeführte Patentdokumente**

- DE 102007049588 A1